# EUROPÄISCHE PATENTSCHRIFT

(11) **EP 0 918 005 B1**
(45) Veröffentlichungstag und Bekanntmachung des Hinweises auf die Patenterteilung: **02.05.2003**
(21) Anmeldenummer: 98121187.3
(22) Anmeldetag: 13.11.1998
(51) Int. Cl.: B60T 11/16, B60T 11/232, B60T 11/236

(54) **Geberzylinder für hydraulische Bremsanlagen**
Pressure generator for hydraulic brake systems
Génerateur de pression pour systèmes hydrauliques de freinage

(30) Priorität: 20.11.1997 DE 19751462
(43) Veröffentlichungstag der Anmeldung: 26.05.1999
(73) Patentinhaber: Continental Teves AG & Co. oHG, 60488 Frankfurt (DE)
(72) Erfinder: König, Harald, 61239 Ober-Mörlen (DE); Jungmann, Udo, 64546 Mörfelden (DE); Kreh, Heinrich, 61197 Florstadt (DE); Beck, Erhard, 35781 Weilburg (DE)

(56) Entgegenhaltungen:
- DE-A- 19 520 682
- DE-A- 19 524 626
- FR-A- 2 647 739

## Beschreibung

Die Erfindung betrifft einen Geberzylinder für hydraulische Kraftfahrzeug-Bremsanlagen, bei denen die Radzylinder fahrerunabhängig von einer Pumpe oder dergleichen mit Bremsflüssigkeit beaufschlagbar sind und bei denen die Bremsflüssigkeit aus einem Vorratsbehälter der Pumpe über den gleichen Strömungsweg zugeführt wird, der für die fahrerseitig eingeleiteten Bremsvorgänge vorgesehen ist, mit einem Gehäuse, einem darin axial verschieblich geführten Plungerkolben, einer zwischen Kolben und Gehäuse angeordneten Dichtung und einem zwischen Kolben und Gehäuse angeordnetem Führungsring, wobei der Führungsring eine sich radial erstreckende, ringförmige Anlagefläche für die Dichtung bildet und der Strömungsweg von einem äußeren Gehäuseanschluß für einen Vorratsbehälter zur Innenseite des hohlzylindrischen Kolbens führt und eine Gehäusebohrung, eine äußere, am Führungsring umlaufende Nut, Radialbohrungen im Führungsring, sich innen am Führungsring axial erstreckende Ausnehmungen, eine außen am Kolben umlaufende Nut und Radialbohrungen in der Kolbenwand umfaßt.

Ein derartiger Geberzylinder ist aus der WO 96/23 683 bekannt. Sie werden vielfach als sogenannte Tandemhauptzylinder mit zwei axial hintereinander angeordneten, mechanisch gekoppelten Kolben sowie zwei getrennten Druckräumen und Nachlaufräumen ausgebildet. Soweit sie in Bremsanlagen eingesetzt werden, bei denen die Radbremszylinder fahrerunabhängig mit Bremsflüssigkeit beaufschlagt werden sollen, muß dafür gesorgt werden, daß der Strömungsweg einen großen Volumenfluß ermöglicht, ohne daß andere Funktionen der beteiligten Bauelemente eingeschränkt oder gar gestört werden. Bei dem bekannten Geberzylinder war die Aufgabe zu lösen, einen hohen Volumenstrom durch die Radialbohrungen der Kolbenwand zu ermöglichen, ohne daß die Gefahr besteht, daß die gehäusefeste Dichtung bei einer Bewegung des Kolbens von den Eintrittskanten der Materialbohrungen zerstört wird. In diesem Zusammenhang wurde festgestellt, daß größere Bohrungsdurchmesser zwar einen größeren Volumenfluß ermöglichen, aber auch die Gefahr der Zerstörung der Dichtung erhöhen und einen größeren Leerweg des Kolbens bedingen, was im Hinblick auf ein möglichst rasches Ansprechen der Bremsanlagen unerwünscht ist. Auf der anderen Seite kann die Anzahl der Radialbohrungen in der Kolbenwand nicht beliebig erhöht werden, weil dadurch der Kolben festigkeitsmäßig zu sehr geschwächt würde. Außerdem soll das angestrebte Ziel selbstverständlich mit einem vertretbaren Fertigungsaufwand erreicht werden.

In der WO 96/23 683 wird vorgeschlagen, auf der Außenfläche des Kolbens eine umlaufende Nut auszubilden, in die die Radialbohrungen münden. Auf diese Weise wird der Strömungswiderstand im Eintrittsbereich der Radialbohrung verringert und gleichzeitig dafür gesorgt, daß die Radialbohrungen nicht entgradet werden müssen, weil sie bei einer Bewegung des Kolbens in radialem Abstand an der Dichtung vorbeigeführt werden.

In der WO 96/23683 wurde auch bereits vorgeschlagen, den Nachlaufraum in einem den Kolben führenden Führungselement auszubilden, welches kolbenseitig radiale Aufnehmungen aufweist, die in Umfangsrichtung durch mindestens einen Steg getrennt sind. Es hat sich jedoch herausgestellt, daß diese Ausnehmungen mit erheblichen fertigungstechnischen Aufwand verbunden sind und eine erhebliche Beeinträchtigung der Kolbenführung verursachen können, wenn bei der Herstellung nicht sehr enge Fertigungstoleranzen eingehalten werden.

Daraus ergibt sich die Aufgabe, die kolbenseitigen Ausnehmungen am Führungsring so abzuwandeln bzw. weiterzubilden, daß einerseits ein großer Volumenstrom an Bremsflüssigkeit ermöglicht, bzw. der Strömungswiderstnad möglichst weit herabgesetzt werden kann, daß andererseits aber der Kolben optimal geführt werden kann. Außerdem wird eine fertigungstechnisch günstige Herstellung der Ausnehmungen angestrebt.

Diese Aufgabe wird erfindungsgemäß dadurch gelöst, daß die Ausnehmungen am Führungsring aus einzelnen, korrespondierend zu den Radialbohrungen angeordneten Nuten bestehen, deren dichtungsseitige Begrenzungskante in Umlaufrichtung gesehen, im wesentlichen parallel zur Kante der Anlagefläche verläuft.

Dem liegt die Erwägung zugrunde, daß das Tragverhalten des Führungsrings durch die eingearbeiteten Nuten nicht eingeschränkt wird, wenn man an dem der Anlagefläche benachbarten Nutende einen schmalen Führungssteg stehen läßt, der in Umfangsrichtung gesehen, eine im wesentlichen gleichbleibende axiale Breite aufweist, so daß die kleinstmögliche Stegbreite über die gesamte Nutbreite realisiert werden kann und die größtmögliche Flächenüberlappung mit der am Kolben außen umlaufenden Nut erreicht wird.

Versuche haben gezeigt, daß mit einem derartig gestalteten Nutende bei den übrigen gleichbleibenden Abmessungen der beteiligten Bauelemente ein großer Volumenstrom bei uneingeschränkten Tragverhalten erreicht werden kann.

Vorteilhafte Ausgestaltungen des Erfindungsgedankens sind in den Unteransprüchen 3 bis 12 beschrieben.

Die Unteransprüche 13 und 14 betreffen eine Variante, die anwendbar ist, wenn man bei der Fertigung weiterer Einsparungen realisieren will und dafür geringfügige Einbußen beim Tragverhalten in Kauf nehmen kann.

Weitere Einzelheiten werden anhand der in den Figuren 1 bis 5 dargestellten Ausführungsbeispiele näher erläutert. Es zeigen:
- Figur 1: in schematisch vereinfachter Darstellung einen Schnitt durch einen Geberzylinder gemäß der Erfindung,
- Figur 2: eine Ausführungsform eines Führungsrings im Schnitt,
- Figur 3: den Führungsring gemäß Figur 2 mit einem bei der Herstellung verwendbaren Fräswerkzeug,
- Figur 4: den Führungsring gemäß Figur 2 in der Ansicht,
- Figur 5: einen Ausschnitt aus Figur 1 mit eine alternativen Ausführungsform des Führungsrings.

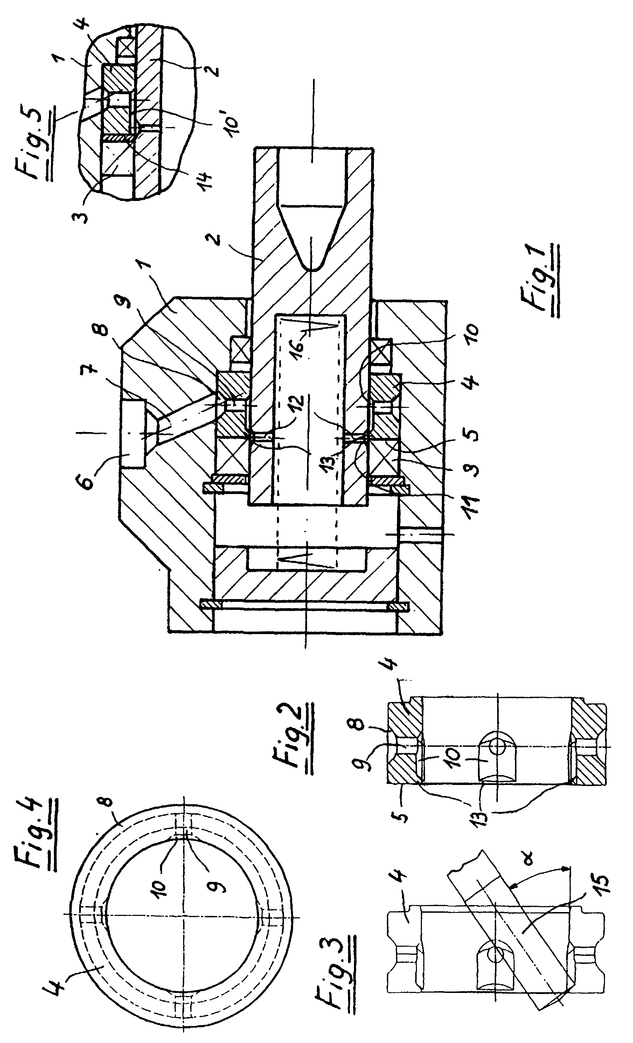

Bei dem in Figur 1 schematisch dargestellten Geberzylinder ist das Gehäuse mit 1 und der darin axial beweglich geführte Kolben mit 2 bezeichnet. Zwischen Gehäuse 1 und Kolben 2 sind eine Dichtung 3 und ein Führungsring 4 angeordnet. Am Führungsring 4 ist eine sich in einer Ebene senkrecht zur Kolbenhauptachse radial erstreckende Anlagefläche 5 für die Dichtung 3 ausgebildet. Der Strömungsweg für die Bremsflüssigkeit führt von einem äußeren Gehäuseanschluß 6 für einen Vorratsbehälter durch eine Gehäusebohrung 7, eine äußere, am Führungsring umlaufende Nut 8, Radialbohrungen 9 im Führungsring 4, sich innen am Führungsring axial erstreckende Ausnehmungen 10, eine außen am Kolben 2 umlaufende Nut 11 und Radialbohrungen 12 in der Kolbenwand zur Innenseite des hohlzylindrisch ausgebildeten Kolbens 2.

Der Kolben 2 weist an seinem rechten Ende eine Eingangsöffnung für ein Betätigungsgestänge auf und ist über eine Rückstellfeder 16 am linken Ende des Gehäuses 1 abgestützt. Eine zweite Dichtung, der Deckel des Gehäuses, die Befestigung der Dichtung 3 und des Deckels sowie die Auslaßöffnung zum Bremskreis sind nicht mit Bezugsziffern bezeichnet, weil diese Bauteile dem Fachmann geläufig und für die Erläuterung der Erfindung ohne Bedeutung sind.

Der in Figur 1 mit 13 bezeichnete Führungssteg ist in den Figuren 2 und 3 deutlicher zu erkennen. Er begrenzt die Nuten 10 auf der Innenseite des Führungsringes 4 die ebenso wie die außen umlaufende Nut 8 und die Radialbohrung 9 zum Strömungsweg für die Bremsflüssigkeit gehören.

Aus Figur 3 ergibt sich, wie ein Fräswerkzeug 15 gestaltet und ausgerichtet sein muß, wenn die Nuten 10 durch Materialabtrag hergestellt werden sollen. Das Fräswerkzeug ist zylindrisch mit einer flach-kegelförmigen Stirnfläche ausgebildet und unter einem Winkel α zur Hauptachse des Führungsringes angestellt. Bei der Bearbeitung wird das Fräswerkzeug 15 in der durch seine Drehachse und die Hauptachse des Führungsringes 4 definierten Ebene, die gleichzeitig die Zeichnungsebene ist, transversal und parallel zur Hauptachse des Führungsrings weiterbewegt. Auf diese Weise kann ein schmaler Führungssteg 13 hergestellt werden, bei dem die Begrenzungskante des dichtungsseitigen Nutendes parallel zur Anlagefläche 5 verläuft, wodurch ein Führungssteg mit in Umfangsrichtung gesehen, gleichbleibender Breite und gleichzeitig eine möglichst große Überlappungsfläche mit der außen am Kolben 2 umlaufenden Nut 11 erreicht wird.

Aus Figur 4 mit dem in der Ansicht dargestellten Führungsring 4 ist ersichtlich, daß vier Radialbohrngen 9 und dementsprechend vier Nuten 10 vorgesehen sind, während die Nut 8 außen am Führungsring 4 umlaufend ausgebildet ist.

Figur 5 zeigt schematisch einen Ausschnitt aus Figur 1 mit Gehäuse 1, Kolben 2, Dichtung 3 und Führungsring 4, bei dem die Nuten 10' am linken Ende durchgehend ausgebildet sind, was fertigungstechnische Vorteile bringt, allerdings auch mit einer gewissen Einbuße an Tragverhalten verbunden ist. Damit die aus weichelastischem Material bestehende Dichtung 3 durch den hydraulischen Druck nicht in die Nuten 10' hineingepreßt werden kann, ist zwischen der Dichtung 3 und dem Führungsring 4 eine ringförmige Scheibe 14 angeordnet, die vorzugsweise aus einem hochfesten Material, wie beispielsweise Stahl, besteht.

## Patentansprüche

1. Geberzylinder für hydraulische Kraftfahrzeug-Bremsanlagen, bei denen die Radbremszylinder fahrerunabhängig von einer Pumpe oder dergleichen mit Bremsflüssigkeit beaufschlagbar sind und bei denen die Bremsflüssigkeit aus einem Vorratsbehälter der Pumpe über den gleichen Strömungsweg zugeführt wird, der für die fahrerseitig eingeleiteten Bremsvorgänge vorgesehen ist, mit einem Gehäuse (1), einem darin axial verschieblich geführten Plunger-Kolben (2), einer zwischen Kolben (2) und Gehäuse (1) angeordneten Dichtung (3) und einem zwischen Kolben und Gehäuse angeordneten Führungsring (4), wobei der Führungsring (4) eine sich radial erstreckende, ringförmige Anlagefläche (5) für die Dichtung (3) bildet und der Strömungsweg von einem äußeren Gehäuseanschluß (6) für einen Vorratsbehälter zur Innenseite des hohlzylindrischen Kolbens (2) führt und eine Gehäusebohrung (7), eine äußere, am Führungsring (4) umlaufende Nut (8), Radialbohrungen (9) im Führungsring (4), sich innen am Führungsring (4) axial erstreckende Ausnehmungen (10), eine außen am Kolben (2) umlaufende Nut (11) und Radialbohrungen (12) in der Kolbenwand umfaßt, **dadurch gekennzeichnet, daß** die Ausnehmungen am Führungsring (4) aus einzelnen, korrespondierend zu den Radialbohrungen (9) angeordneten Nuten (10) bestehen, deren dichtungsseitige Begrenzungskante in Umlaufrichtung gesehen, im wesentlichen parallel zur Kante der Anlagefläche (5) verläuft.

2. Geberzylinder nach Anspruch 1, **dadurch gekennzeichnet, daß** zwischen dem dichtungsseitigen Ende der Nuten (10) und der Anlagefläche (5) ein schmaler Führungssteg (13) mit in Umfangsrichtung gesehen im wesentlichen gleichbleibender axialer Breite ausgebildet ist.

3. Geberzylinder nach Anspruch 1 oder 2, **dadurch gekennzeichnet, daß** die dichtungsseite Grenzfläche der Nuten (10) von der Begrenzungskante zum Nutgrund divergierend zur Anlagefläche verläuft.

4. Geberzylinder nach Anspruch 3, **dadurch gekennzeichnet, daß** die Grenzfläche im Längsschnitt gesehen, unter einem Winkel vom 30 bis 60°, vorzugsweise von etwa 45° divergierend zur Anlagefläche verläuft.

5. Geberzylinder nach einem der Anspruch 1 bis 4, **dadurch gekennzeichnet, daß** die axial gegenüberliegende Grenzfläche der Nuten (10) entgegengesetzt divergierend verläuft und im Nutgrund benachbart zur Radialbohrung (9) endet.

6. Geberzylinder nach einem der Ansprüche 1 bis 5, **dadurch gekennzeichnet, daß** die Nuten (10) einen rechteckigen Querschnitt haben.

7. Geberzylinder nach einem der Ansprüche 1 bis 5, **dadurch gekennzeichnet, daß** die Nuten (10) einen dreiecksförmigen Querschnitt haben.

8. Geberzylinder nach Anspruch 6 oder 7, **dadurch gekennzeichnet, daß** der Führungsring (4) aus Metall besteht und daß die Nuten (10) durch Materialabtrag, beispielsweise mittels Funkenerosion hergestellt sind.

9. Geberzylinder nach Anspruch 6 oder 7, **dadurch gekennzeichnet, daß** der Führungsring (4) aus einem gießtechnisch geformten Material besteht.

10. Geberzylinder nach einem der Ansprüche 1 bis 5, **dadurch gekennzeichnet, daß** die Nuten (10) einen teilkreisförmigen Querschnitt haben.

11. Geberzylinder nach Anspruch 10, **dadurch gekennzeichnet, daß** der Führungsring (4) aus Metall besteht und daß die Nuten (10) eine Form haben, die mittels eines rotierenden, zylindrischen Fräswerkzeugs (15) mit flach kegelförmiger Stirnfläche herstellbar ist, dessen Drehachse schräg zur Hauptachse des Führungsrings um den Winkel α angestellt ist und der bei der Bearbeitung in der von der Drehachse und der Hauptachse definierten Ebene parallel zur Hauptachse weiterbewegt wird.

12. Geberzylinder nach Anspruch 10, **dadurch gekennzeichnet, daß** der Führungsring (4) aus einem gießtechnisch geformten Material besteht, bei dem die Nuten gemäß Anspruch 11 mittels entsprechend gestalteter Formwerkzeuge hergestellt sind.

13. Geberzylinder nach Anspruch 1, jedoch mit der Maßgabe, daß die Nuten (10') dichtungsseitig durchgehend ausgebildet sind und daß zwischen der Dichtung (3) und der Anlagefläche (5) eine ringförmige Scheibe (14) angeordnet ist.

14. Geberzylinder nach Anspruch 13, **dadurch gekennzeichnet, daß** die Scheibe (14) aus eine hochfesten Material, wie z.B. Stahl, besteht.

## Claims

1. Master cylinder for hydraulic automotive vehicle brake systems, wherein brake fluid can be applied to the wheel brake cylinders by a pump or a like element irrespective of the driver, and wherein the brake fluid is supplied from a supply reservoir of the pump via the same flow path as is provided for brake operations initiated by the driver, with a housing (1), a plunger piston (2) guided therein in an axially displaceable manner, a seal (3) arranged between piston (2) and housing (1), and a guide ring (4) arranged between piston and housing, the said guide ring (4) forming a radially extending annular abutment surface (5) for the seal (3), and wherein the flow path leads from an external housing port (6) for a supply reservoir to the inside of the hollow-cylindrical piston (2) and comprises a housing bore (7), a circumferential groove (8) extending on the outside of guide ring (4), radial bores (9) in the guide ring (4), recesses (10) axially extending on the inside of guide ring (4), a circumferential groove (11) extending on the outside of the piston (2) and radial bores (12) in the piston wall,
**characterized in that** the recesses on the guide ring (4) consist of individual grooves (10) arranged corresponding to the radial bores (9), with their boundary edge close to the seal, when viewed in the direction of rotation, extending substantially in parallel to the edge of the abutment surface (5).

2. Master cylinder as claimed in claim 1,
**characterized in that** a narrow guide web (13) with an axial width that remains substantially equal when viewed in a circumferential direction, is designed between the end of the grooves (12) close to the seal and the abutment surface (5).

3. Master cylinder as claimed in claim 1 or 2,
**characterized in that** the boundary surface of the grooves (10) close to the seal extends from the boundary edge to the groove bottom diverging towards the abutment surface.

4. Master cylinder as claimed in claim 3,
**characterized in that** when viewed in a longitudinal section, the boundary surface extends at an angle of 30 to 60°, preferably about 45°, diverging to the abutment surface.

5. Master cylinder as claimed in any one of claims 1 to 4,
**characterized in that** the axially opposite boundary surface of the grooves (10) extends oppositely divergent and ends in the groove bottom adjacent to the radial bore (9).

6. Master cylinder as claimed in any one of claims 1 to 5,
**characterized in that** the grooves (10) have a rectangular cross-section.

7. Master cylinder as claimed in any one of claims 1 to 5,
**characterized in that** the grooves (10) have a triangular cross-section.

8. Master cylinder as claimed in claim 6 or 7,
**characterized in that** the guide ring (4) is made of metal, and **in that** the grooves (10) are fabricated by material erosion, e.g. by means of spark erosion.

9. Master cylinder as claimed in claim 6 or 7,
**characterized in that** the guide ring (4) is made of a material shaped in a casting operation.

10. Master cylinder as claimed in any one of claims 1 to 5,
**characterized in that** the grooves (10) have a cross-section shaped like a divided circle.

11. Master cylinder as claimed in claim 10,
**characterized in that** the guide ring (4) is made of metal, and **in that** the grooves (10) have a configuration which can be made by means of a rotating cylindrical milling tool (15) with a flatly conical end surface, whose axis of rotation is oriented transversely by the angle α in relation to the main axis of the guide ring, and which is moved further in the machining operation in the plane defined by the axis or rotation and the main axis in parallel to the main axis.

12. Master cylinder as claimed in claim 10,
**characterized in that** the guide ring (4) is made of a material shaped in a casting operation, wherein the grooves according to claim 11 are manufactured by means of accordingly configured form tools.

13. Master cylinder as claimed in claim 1, however, subject to the proviso that the grooves (10') close to the seal have a continuous design, and in that an annular disc (14) is arranged between the seal (3) and the abutment surface (5).

14. Master cylinder as claimed in claim 13,
**characterized in that** the disc (14) is made of a high-strength material such as steel.

## Revendications

1. Cylindre transmetteur pour systèmes hydrauliques de freinage de véhicules automobiles dans lesquels les cylindres des freins des roues peuvent être alimentés en liquide de freinage indépendamment du conducteur, par une pompe ou similaire, et dans lesquels le liquide de freinage est envoyé à la pompe, depuis un réservoir, par le même parcours d'écoulement qui est prévu pour les opérations de freinage amorcées par le conducteur, comportant un boîtier (1), un piston plongeur (2) guidé axialement et coulissant à l'intérieur, une garniture d'étanchéité (3) disposée entre le piston (2) et le boîtier (1), et une bague de guidage (4) disposée entre le piston et le boîtier, la bague de guidage (4) formant une surface de contact (5) annulaire, s'étendant radialement, pour la garniture d'étanchéité (3) et le parcours d'écoulement menant d'un raccord (6) extérieur du boîtier pour un réservoir vers le côté intérieur du piston (2) cylindrique creux, et comprenant un perçage (7) du boîtier, une rainure (8) extérieure sur le pourtour de la bague de guidage (4), des perçages radiaux (9) dans la bague de guidage (4), des évidements (10) s'étendant axialement à l'intérieur sur la bague de guidage (4), une rainure (11) s'étendant sur le pourtour extérieur du piston (2) et des perçages radiaux (12) dans la paroi du piston, **caractérisé en ce que** les évidements sur la bague de guidage (4) sont constitués de rainures (10) individuelles, disposées en correspondance aux perçages radiaux (9), dont le bord de délimitation côté étanchéité, vu dans la direction périphérique, s'étend sensiblement parallèlement au bord de la surface de contact (5).

2. Cylindre transmetteur selon la revendication 1, **caractérisé en ce qu'**une nervure de guidage (13) étroite dont la largeur axiale, vue dans la direction périphérique, est sensiblement constante, est formée entre l'extrémité côté étanchéité des rainures (10) et la surface de contact (5).

3. Cylindre transmetteur selon la revendication 1 ou 2, **caractérisé en ce que** la surface limite côté étanchéité des rainures (10) s'étend du bord de délimitation vers le fond des rainures, en s'écartant de la surface de contact.

4. Cylindre transmetteur selon la revendication 3, **caractérisé en ce que** la surface limite, vue en coupe longitudinale, s'étend suivant un angle de 30 à 60°, de préférence d'environ 45° en s'écartant de la surface de contact.

5. Cylindre transmetteur selon l'une des revendications 1 à 4, **caractérisé en ce que** les surfaces limites axialement opposées des rainures (10) s'étendent en s'écartant, dans des sens opposés, et se terminent dans le fond des rainures à proximité du perçage radial (9).

6. Cylindre transmetteur selon l'une des revendications 1 à 5, **caractérisé en ce que** les rainures (10) ont une section transversale rectangulaire.

7. Cylindre transmetteur selon l'une des revendications 1 à 5, **caractérisé en ce que** les rainures (10) ont une section transversale de forme triangulaire.

8. Cylindre transmetteur selon la revendication 6 ou 7, **caractérisé en ce que** la bague de guidage (4) est en métal et **en ce que** les rainures (10) sont réalisées par enlèvement de matière, par exemple par électro-érosion.

9. Cylindre transmetteur selon la revendication 6 ou 7, **caractérisé en ce que** la bague de guidage (4) est constituée d'une matière moulée par une technique de coulée.

10. Cylindre transmetteur selon l'une des revendications 1 à 5, **caractérisé en ce que** les rainures (10) ont une section transversale en forme de cercle partiel.

11. Cylindre transmetteur selon la revendication 10, **caractérisé en ce que** la bague de guidage (4) est en métal et **en ce que** les rainures (10) ont une forme qui peut être réalisée au moyen d'un outil de fraisage cylindrique rotatif avec face frontale en forme de cône plat dont l'axe de rotation est incliné de l'angle α par rapport à l'axe principal de la bague de guidage, et qui, pendant l'usinage, est déplacé parallèlement à l'axe principal, dans le plan défini par l'axe de rotation et l'axe principal.

12. Cylindre transmetteur selon la revendication 10, **caractérisé en ce que** la bague de guidage (4) est constituée d'une matière moulée par une technique de coulée, dans laquelle les rainures selon la revendication 11, sont réalisées au moyen d'outils de moulage de forme appropriée.

13. Cylindre transmetteur selon la revendication 1, mais sous réserve que les rainures (10') soient réalisées de bout en bout côté étanchéité et qu'un disque (14) de forme annulaire soit disposé entre la garniture d'étanchéité (3) et la surface de contact (5).

14. Cylindre transmetteur selon la revendication 13, **caractérisé en ce que** le disque (14) est constitué d'une matière très résistante, par exemple en acier.
